# EUROPÄISCHE PATENTANMELDUNG

(11) **EP 0 681 135 A2**
(43) Veröffentlichungstag der Anmeldung: **08.11.1995**
(21) Anmeldenummer: 94110882.1
(22) Anmeldetag: 13.07.1994
(51) Int. Cl.: F16L 5/08, F16L 5/06

(54) **Vorrichtung zur Durchführung von Leitungen durch eine Öffnung in einer Wand**

(30) Priorität: 07.05.1994 DE 4416275
(71) Anmelder: Hauff, Werner, D-89561 Ballmertshofen (DE)
(72) Erfinder: Hauff, Werner, D-89561 Ballmertshofen (DE)
(74) Vertreter: Fay, Hermann, Dipl.-Phys. Dr.

(57) **Zusammenfassung**

Die Vorrichtung besitzt ein in die Wandöffnung (2) einsetzbares, die Leitungen (3) aufnehmendes und gegen die Leitungen abdichtbares Einsatzteil (4), das einen in Leitungslängsrichtung zwischen zwei Druckscheiben (5) angeordneten Dichtkörper (6) aufweist, der unter einem von den Druckscheiben (5) auf ihn ausgeübten Preßdruck zusammendrückbar ist und dadurch gegen die Laibungsfläche (7) der Wandöffnung (2) abdichtet. An einer der Druckscheiben (5) sind vom Preßdruck beaufschlagte Klemmteile (9) angeordnet, die an einer Gleitfläche (10) verstellbar geführt sind, die zur Leitungslängsrichtung geneigt verläuft, so daß die Klemmteile (9) unter der Wirkung des Preßdrucks auf der Gleitfläche (10) auswärts gegen die Laibungsfläche (7) verstellt und angepreßt werden, was das Einsatzteil (4) gegen Verrutschen in Leitungslängsrichtung sichert.

## Beschreibung

Die Erfindung betrifft eine Vorrichtung zur Durchführung von Leitungen, wie Rohre, Kabel oder dergl., durch eine Öffnung in einer Wand, wie Mauer- oder Betonwand, mit einem in die Wandöffnung einsetzbaren, die Leitungen aufnehmenden und gegen die Leitungen abdichtbaren Einsatzteil, das einen in Leitungslängsrichtung zwischen zwei Druckscheiben angeordneten Dichtkörper aufweist, der unter einem von den Druckscheiben auf ihn ausgeübten Preßdruck zusammendrückbar ist und dadurch gegen die Laibungsfläche der Wandöffnung abdichtet.

Vorrichtungen dieser Art sind aus der US-PS 1 851 940 bekannt. Unter dem Preßdruck der Druckscheiben wird der aus einem elastisch verformbaren und im wesentlichen inkompressiblen Werkstoff, wie etwa Gummi, bestehende Dichtkörper zusammengedrückt und dadurch quer zur Leitungslängsrichtung erweitert, so daß er sich unter Druck gegen die Laibungsfläche der Wandöffnung anlegt und dort abdichtet. Vorrichtungen dieser Art haben sich in der Praxis gut bewährt, besitzen aber den Nachteil, daß an den Leitungen auftretende Zugbelastungen nur in sehr beschränktem Umfang in der Vorrichtung aufgenommen werden können. Denn der Dichtkörper ist in Leitungslängsrichtung nur durch Reibungsschluß an der Laibungsfläche der Wandöffnung gehalten und dieser Reibungsschluß reicht oft nicht aus, von den Leitungen in den Dichtkörper eingetragene Zugbelastungen aufzufangen, ohne daß der Dichtkörper in der Wandöffnung verrutscht oder gar aus der Wandöffnung herausgezogen wird und im Ergebnis die Abdichtung gegen die Wand leidet.

Der Erfindung liegt die Aufgabe zugrunde, eine Vorrichtung der eingangs genannten Art so auszubilden, daß die Sicherheit und die Dichtigkeit ihres Sitzes in der Wandöffnung auch unter höheren Zugbelastungen durch die Leitungen gewährleistet ist.

Diese Aufgabe wird nach der Erfindung bei einer Vorrichtung zur Durchführung von Leitungen mit den eingangs genannten Merkmalen dadurch gelöst, daß an einer der Druckscheiben mindestens ein vom Preßdruck beaufschlagtes Klemmteil angeordnet ist, das an einer Gleitfläche verstellbar geführt ist, die zur Leitungslängsrichtung geneigt verläuft, so daß das Klemmteil unter der Wirkung des Preßdrucks auf der Gleitfläche auswärts gegen die Laibungsfläche verstellt und gegen sie angepreßt wird.

Nach der Erfindung ist nicht mehr nur der Reibungsschluß des Dichtkörpers an der Laibungsfläche der Wandöffnung für die Fixierung der Vorrichtung in Leitungslängsrichtung maßgebend, sondern vor allem der vom Klemmteil an der Laibungsfläche erzeugte Klemmsitz. Die Kraft, mit der das Klemmteil gegen die Laibungsfläche gepreßt wird, reicht aus, daß sich das Klemmteil in die Laibungsfläche eindrückt und sich ein formschlüssiger Klemmsitz ergibt, der sehr hohe Zugkräfte ohne Verrutschen des Klemmteils aufnehmen kann. Dieser Klemmsitz ergibt sich selbsttätig mit dem Verspannen des Dichtkörpers, wobei die am Klemmteil wirksame Klemmkraft im Vergleich mit dem auf den Dichtkörper wirkenden Preßdruck optimal mit Hilfe der Kraftübersetzung eingestellt werden kann, die sich an der Gleitfläche infolge deren Neigung gegen die Leitungslängsrichtung und somit gegen die Richtung des von den Druckscheiben auf den Dichtkörper ausgeübten Preßdrucks ergibt. Das an der Gleitfläche geführte Klemmteil bildet im Prinzip ein Keilgetriebe mit vom Neigungswinkel der Gleitfläche abhängigem Kraftübersetzungsverhältnis. Das Klemmteil kann auf nur einer Seite des Dichtkörpers vorgesehen sein; es können aber auch auf beiden Seiten des Dichtkörpers je eigene Klemmteile angeordnet werden.

In einer bevorzugten Ausführungsform der Erfindung ist das Klemmteil auf der vom Dichtkörper abgewandten Seite der Druckscheibe angeordnet und die Gleitfläche an der Druckscheibe und am Klemmteil ausgebildet, das auf der von der Gleitfläche abgewandten Seite eine zur Leitungslängsrichtung senkrechte Stirnfläche für die Beaufschlagung mit dem Preßdruck aufweist. Der Vorteil dieser Ausführungsform besteht darin, daß der Preßdruck auf den Dichtkörper unmittelbar von der Druckscheibe ausgeübt wird, also das Klemmteil bei seiner Auswärtsverstellung nicht am Dichtkörper, sondern nur an der selbst ihre Lage quer zur Leitungslängsrichtung nicht ändernden Druckscheibe gleitet. Weiter empfiehlt es sich, das Klemmteil zu mehreren vorzusehen und diese Klemmteile gleichmäßig über den Umfang des Einsatzteils zu verteilen, so daß eine über den gesamten Umfang der Wandöffnung wirksame Sicherung der Vorrichtung gegen Verrutschen erhalten wird. - Die Führung der Klemmteile an der Gleitfläche kann im einzelnen auf verschiedene Weise verwirklicht werden. Eine zweckmäßige Ausführungsform ist dadurch gekennzeichnet, daß die Gleitfläche für das Klemmteil vom Boden einer in der Druckscheibe auswärts zur Laibungsfläche verlaufenden Nut gebildet ist, in der das Klemmteil längsverstellbar geführt ist. Nach einem anderen sehr vorteilhaften Vorschlag sind die Klemmteile als sektorförmige Ringabschnitte und die Gleitflächen an der Druckscheibe und den Klemmteilen als Kegelflächen ausgebildet. Eine weiter besonders bevorzugte Ausführungsform ist dadurch gekennzeichnet, daß die Klemmteile gegen die Laibungsfläche gerichtete scharfkantige oder spitze Vorsprünge aufweisen, die beim Anpressen der Klemmteile gegen die Laibungsfläche in letztere eindringen. Auch empfiehlt es sich, daß die Laibungsfläche von der Innenseite eines die Wandöffnung auskleidenden Futterrohrs gebildet ist, das in seiner Längsrichtung unverschiebbar in der Wandöffnung angeordnet und an seiner Außenseite gegen die Wand abgedichtet ist. Durch die Wahl eines geeigneten Werkstoffs für das Futterrohr kann immer unschwer erreicht werden, daß die Klemmteile ausreichend tief in die Laibungsfläche eindringen und sich am Futterrohr festsetzen können.

Ein weiterer Vorteil der Erfindung ist darin zu sehen, daß die Erfindung weitgehend unabhängig davon verwirklicht werden kann, wie im einzelnen das Einsatzteil beschaffen ist, soweit es nur mit dem Dichtkörper und seinen Druckscheiben kombinierbar ist. In einer wegen ihrer Einfachheit besonders vorteilhaften Ausführungsform kann der Dichtkörper insgesamt unmittelbar das Einsatzteil bilden, wozu der Dichtkörper erfindungsgemäß den von der Laibungsfläche umschlossenen Durchführungsquerschnitt ausfüllt, mit einer oder mehreren Durchführungsöffnungen für die Aufnahme der Leitung bzw. Leitungen versehen ist und unter der Wirkung des Preßdrucks nicht nur gegen die Laibungsfläche, sondern zugleich auch gegen die Leitung bzw. Leitungen abdichtet. In einer anderen vorteilhaften Ausführungsform verfügt das Einsatzteil über einen mit seinem Inneren die Durchtrittsöffnung für die Leitung bzw. Leitungen bildenden Rohrstutzen, dessen Außenquerschnitt kleiner als der von der Laibungsfläche umschlossene Durchführungsquerschnitt ist, so daß zwischen dem Rohrstutzen und der Laibungsfläche ein Ringraum verbleibt, in dem sich der Dichtkörper und die Druckscheiben von entsprechender Ringform sowie die Klemmstücke befinden. In diesem Fall empfiehlt es sich, eine der Druckscheiben als Ringflansch des Rohrstutzens auszubilden, wodurch auf besonders einfache Weise erreicht wird, daß sich der Rohrstutzen axial im Einsatzteil nicht verschieben und Zugkräfte aus den Leitungen ohne Verrutschen übertragen kann. Bleibt der Rohrstutzen in seinem Inneren frei, ermöglicht er eine sehr vielfältige Belegung mit Leitungen, wobei der Rohrstutzen zweckmäßigerweise am vor der Wand liegenden Stutzenende einen die Leitungen auf ihrem weiteren Vrlauf aufnehmenden Kabelschutzschlauch aus PVC mit einer für seine Druckfestigkeit sorgenden, eingelegten Spirale aus Hart-PVC oder direkt zur Abdichtung gegen die Leitung bzw. Leitungen eine Dichtmanschette trägt, die auf die Leitung bzw. Leitungen aufgeschrumpft ist. Es besteht aber auch die Möglichkeit, daß im Innern des Rohrstutzens ein Füllkörper angeordnet ist, der eine oder mehrere Durchführungsöffnungen für die Leitung bzw. Leitungen aufweist und sowohl gegen den Rohrstutzen als auch gegen die Leitung bzw. Leitungen abgedichtet ist. Der Füllkörper kann fest und abgedichtet im Rohrstutzen angeordnet sein. Besser aber und daher bevorzugt ist der Füllkörper kleiner als der Innenquerschnitt des Rohrstutzens, so daß zwischen dem Füllkörper und dem Rohrstutzen ein Ringraum besteht, in dem, in gleicher Weise wie im äußeren Ringraum zwischen dem Rohrstutzen und der Laibungsfläche, ein weiterer Dichtkörper zwischen zwei weiteren Druckscheiben angeordnet ist, der unter dem Preßdruck dieser Druckscheiben zusammendrückbar ist und dadurch sowohl gegen den Rohrstutzen als auch gegen den Füllkörper abdichtet. In diesem Fall besteht desweiteren die vorteilhafte Möglichkeit, den Füllkörper im Rohrstutzen in vergleichbarer Weise wie den Rohrstutzen in der Wandöffnung gegen Verrutschen in Leitungslängsrichtung zu sichern, indem nämlich die Anordnung so getroffen wird, daß einer der weiteren Druckscheiben mindestens ein weiteres Klemmteil zugeordnet und die diesem Klemmteil zugeordnete Gleitfläche so geneigt ist, daß das Klemmteil unter der Wirkung des Preßdrucks auf der Gleitfläche einwärts vor die Stirnfläche des Füllkörpers verstellt wird und in dieser Stellung für den Füllkörper einen Anschlag bildet, der den Füllkörper im Rohrstutzen gegen Verschiebung in Leitungslängsrichtung sichert.

Schließlich bestehen auch für die Erzeugung des Preßdrucks auf den oder die Dichtkörper verschiedene Möglichkeiten, wobei aber am einfachsten und daher zumeist bevorzugt in einem Spanngewinde eine Spannmutter geführt ist, die zur Erzeugung des Preßdrucks in Richtung zur benachbarten Druckscheibe verdrehbar und im Spanngewinde gegen diese Druckscheibe oder die neben ihr angeordneten Klemmteile verspannbar ist. Bei einer dafür geeigneten Ausführungsform mit einem im Querschnitt kreisförmigen Rohrstutzen kann das Spanngewinde an einer der Umfangsflächen des Rohrstutzens und die Spannmutter im Spanngewinde drehbar auf dem Rohrstutzen angeordnet sein. Handelt es sich dabei insbes. um eine Vorrichtung mit je einem Dichtkörper auf beiden Seiten des Rohrstutzens, kann je ein eigenes Spanngewinde auf der inneren und auf der äußeren Umfangsfläche des Rohrstutzens mit je einer eigenen Spannmutter vorgesehen sein. Der Preßdruck kann aber auch, insbes. bei nicht kreisförmigem Vorrichtungsquerschnitt, durch eine Reihe von jeweils mit dem Spanngewinde versehenen und eine eigene Spannmutter tragenden Spannbolzen erzeugt werden, welche die beiden Druckscheiben jedes Dichtkörpers verbinden und die Klemmteile in Langlöchern durchsetzen, die in der Verstellrichtung der Klemmteile verlaufen und mindestens von gleicher Länge wie der Verstellweg der Klemmteile sind. Aus Gründen einer einfachen Montage sind die Spannbolzen zweckmäßigerweise an der innen in der Wandöffnung liegenden Druckscheibe drehfest gehalten und am anderen Ende mit dem Spanngewinde und der von außerhalb der Wandöffnung zugänglichen Spannmutter versehen.

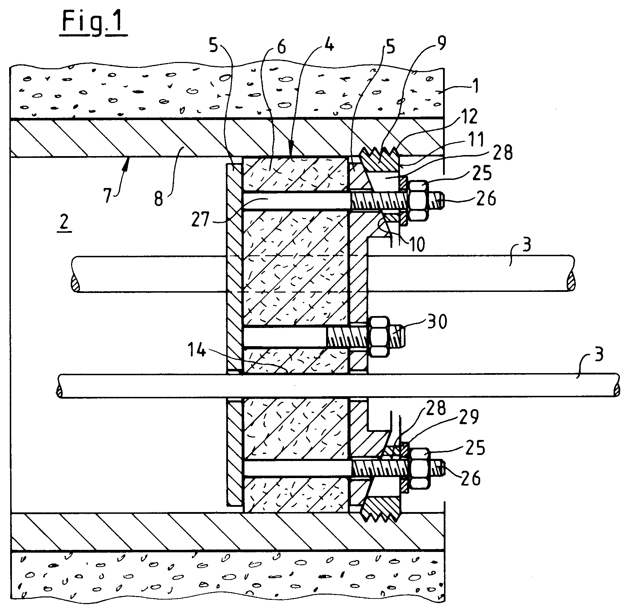

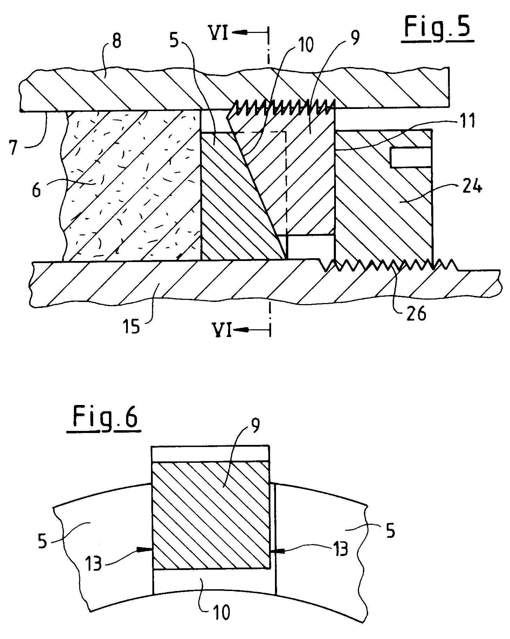

Im folgenden wird die Erfindung an in der Zeichnung dargestellten Ausführungsbeispielen näher erläutert. Die Fig. 1 bis 4 zeigen verschiedene Ausführungsformen der erfindungsgemäßen Vorrichtung zur Durchführung von Leitungen durch eine Öffnung in einer Wand. Die Fig. 5 zeigt das in Figur mit V gekennzeichnete Detail in vergrößerter Darstellung, die Fig. 6 den Schnitt VI - VI in Fig. 5.

In der Zeichnung ist jeweils die Wand mit 1, die Wandöffnung mit 2 bezeichnet. Die durch die Wandöffnung 2 hindurchführenden Leitungen, beispielsweise Kabel, tragen die Bezugsziffer 3. Die Leitungen durchsetzen ein allgemein mit 4 bezeichnetes, in die Wandöffnung einsetzbares Einsatzteil, das gegen die Leitungen 2 abgedichtet ist und einen in Leitungslängsrichtung zwischen zwei Druckscheiben 5 angeordneten Dichtkörper 6 aufweist. Dieser Dichtkörper 6 ist unter einem von den Druckscheiben 5 in noch näher zu beschreibender Weise auf ihn ausgeübten Preßdruck in Leitungslängsrichtung zusammendrückbar und dichtet infolge dessen gegen die Laibungsfläche 7 der Wandöffnung 2 ab. Dazu muß der Werkstoff des Dichtkörpers 6 im wesentlichen inkompressibel sein, was beispielsweise der Fall ist, wenn der Dichtkörper 6 aus einem Gummi oder Kunstgummi besteht. An einer der Druckscheiben 5, in den Fig. 1 bis 4 jeweils der rechten Druckscheibe, sind vom Preßdruck beaufschlagte Klemmteile 9 angeordnet, die an einer Gleitfläche 10 verstellbar geführt sind, wobei diese Gleitfläche 10 derart zur Leitungslängsrichtung geneigt verläuft, daß sich die Klemmteile 9 unter der Wirkung des Preßdrucks auf der Gleitfläche 10 auswärts gegen die Laibungsfläche 7 verstellen und sich gegen die Laibungsfläche 7 verpressen.

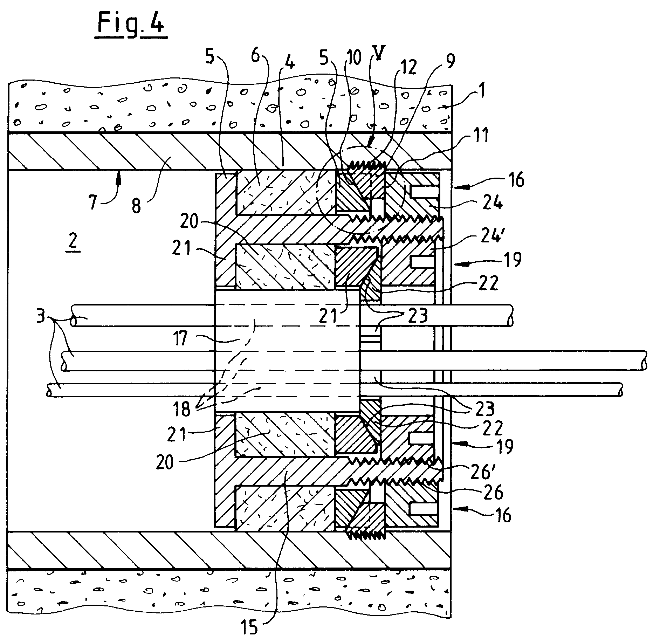

In allen dargestellten Ausführungsformen befinden sich die Klemmteile 9 auf der vom Dichtkörper 6 abgewandten Seite der Druckscheibe 5, so daß die Klemmteile 9 bei ihrer Auswärtsbewegung gegen die Laibungsfläche 7 an der Druckscheibe 5, nicht aber etwa am Dichtkörper 6 abgleiten. Die Gleitfläche 10 ist dazu einerseits an der Druckscheibe 5, andererseits an den Klemmteilen 9 ausgebildet. Die Klemmteile 9 sind an ihrer von der Druckscheibe 5 abgewandten Seite mit einer zur Leitungslängsrichtung senkrechten Stirnfläche 11 für die Beaufschlagung mit dem Preßdruck ausgebildet. Die Klemmteile 9 sind gleichmäßig über den Umfang der Druckscheibe 5 verteilt und mit gegen die Laibungsfläche 7 gerichteten scharfkantigen oder spitzen Vorsprüngen 12 versehen, die beim Anpressen der Klemmteile 9 gegen die Laibungsfläche 7 in diese eindringen und zu einem Formschluß in Leitungslängsrichtung führen, so daß sich die Klemmteile 9 und mit ihnen auch die Vorrichtung im Ganzen nicht innerhalb der Wandöffnung 2 in Leitungslängsrichtung verschieben können, und zwar auch dann nicht, sollten von den Leitungen 2 größere oder auch große Zugkräfte in das Einsatzteil 4 und den Dichtkörper 6 eingetragen werden. Die Laibungsfläche 7 selbst ist dabei in den Ausführungsbeispielen von der Innenseite eines die Wandöffnung 2 auskleidenden Futterrohres 8 gebildet, das in seiner Längsrichtung unverschiebbar in der Wandöffnung befestigt und an seiner Außenseite gegen die Wand 1 abgedichtet ist. In den Ausführungsformen nach den Fig. 1 bis 3 sind die Klemmteile 9 als sektorförmige Ringabschnitte und die Gleitflächen 10 als Kegelflächen ausgebildet. Es besteht aber auch die aus den Fig. 4 bis 6 ersichtliche Möglichkeit, daß für jedes Klemmteil 9 die Gleitfläche 10 vom Boden einer in der Druckscheibe 5 auswärts zur Laibungsfläche 7 verlaufenden, parallelrandigen Nut 13 gebildet ist, in der das Klemmteil 9 längsverstellbar geführt ist.

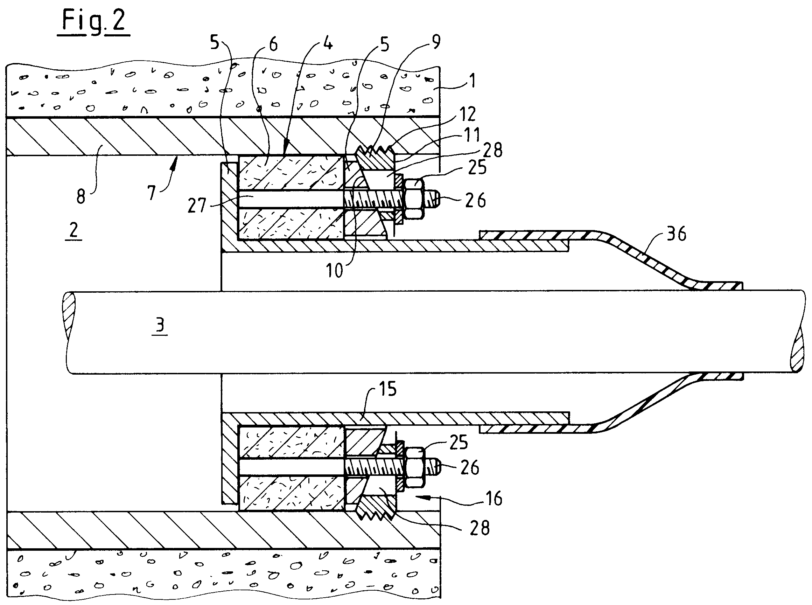

Im Ausführungsbeispiel nach Fig. 1 bildet das Einsatzteil 4 insgesamt den Dichtkörper 6, der den von der Laibungsfläche 7 umschlossenen Durchführungsquerschnitt ausfüllt und mit einer oder mehreren Durchführungsöffnungen 14 für die Aufnahme der Leitung bzw. Leitungen 3 versehen ist und unter der Wirkung des Preßdrucks nicht nur gegen die Laibungsfläche 7, sondern zugleich auch gegen die Leitung bzw. Leitungen 3 abdichtet. In den Ausführungsbeispielen nach den Fig. 2 bis 4 umfaßt dagegen das Einsatzteil 4 einen mit seinem Inneren den Durchführungsquerschnitt für die Leitung bzw. Leitungen 3 bildenden Rohrstutzen 15, dessen Außenquerschnitt kleiner als die von der Laibungsfläche 7 umschlossene Durchführungsöffnung 2 ist, so daß zwischen dem Rohrstutzen und der Laibungsfläche 7 ein Ringraum 16 verbleibt, in dem sich der Dichtkörper 6 und die Druckscheiben 5 von entsprechender Ringform sowie die Klemmteile 9 befinden. Die in den Figuren linke Druckscheibe 5 ist unmittelbar als Ringflansch des Rohrstutzens 15 ausgebildet. Zur Abdichtung gegen die Leitungen 3 kann der Rohrstutzen 15 am vor der Wand 1 liegenden Stutzenende ein in den Figuren nur teilweise dargestellte Dichtmanschette 36 tragen, die auf die Leitung bzw. Leitungen 3 aufgeschrumpft wird. Bei mehreren Leitungen 3 kann die Dichtmanschette 36 für jede einzelne Leitung einen eigenen, jeweils nur auf diese Leitung aufgeschrumpften Manschettenfinger besitzen, was in der Zeichnung aber im einzelnen nicht dargestellt ist. Die Abdichtung des Rohrstutzens 15 gegen die Leitungen 3 kann aber auch in der in Fig. 4 dargestellten Weise dadurch erfolgen, daß im Innern des Rohrstutzens 15 ein Füllkörper 17 angeordnet ist, der je nach Anzahl der aufzunehmenden Leitungen 3 eine oder mehrere, nur gestrichelt angedeutete Durchtrittsöffnungen 18 aufweist und sowohl gegen den Rohrstutzen 15 einerseits als auch gegen die Leitung bzw. Leitungen 3 andererseits abgedichtet ist. Im Ausführungsbeispiel ist für diese Abdichtung zwischen dem Füllkörper 17 und dem Rohrstutzen 15 ein Ringraum 19 vorgesehen, in dem, in gleicher Weise wie der Dichtkörper 6 im äußeren Ringraum 16 zwischen dem Rohrstutzen 15 und der Laibungsfläche 7, ein weiterer Dichtkörper 20 zwischen zwei eigenen, weiteren Druckscheiben 21 angeordnet ist, der unter dem Preßdruck dieser Druckscheiben 21 wiederum zusammendrückbar ist und dadurch sowohl gegen den Rohrstutzen 15 als auch gegen den Füllkörper 17 abdichtet, wie es bezüglich des ersten Dichtkörpers 6 für die Abdichtung zwischen dem Rohrstutzen 15 und der Laibungsfläche 7 der Fall ist. Der vom zweiten Dichtkörper 20 auf den Füllkörper 17 ausgeübte Druck kann auch dazu dienen, überall im Füllkörper 17 eine zugleich die Abdichtung des Füllkörpers 17 gegen die Leitung bzw. Leitungen 3 bewirkende Druckbeanspruchung zu erzeugen. Um zu verhindern, daß sich der Füllkörper 17 in Leitungslängsrichtung im Rohrstutzen 15 verschieben kann, sind der in Fig. 4 rechten Druckscheibe 21 weitere Klemmteile 22 zugeordnet, wobei die diesen Klemmteilen 22 zugeordnete Gleitfläche 23 so geneigt ist, daß die Klemmteile 22 unter der Wirkung des Preßdrucks auf der Gleitfläche 23 einwärts vor die Stirnfläche 17' des Füllkörpers 17 verstellt werden und in dieser vorgeschobenen Stellung für den Füllkörper 17 einen Anschlag bilden, der den Füllkörper 17 im Rohrstutzen 15 gegen Verschieben in Leitungslängsrichtung nach rechts sichert. Selbstverständlich besteht die Möglichkeit, derartige als Anschlag für den Füllkörper 17 wirkende Klemmteile 22 auch auf der in Fig. 4 linken Seite des inneren Dichtkörpers 20 zu verwirklichen, um eine Bewegungssicherung des Füllkörpers 17 auch nach links zu erreichen, was aber in der Weise geschehen kann, daß die mit dem Rohrstutzen 15 einstückige linke Druckscheibe 21 den Füllkörper 17 auf seiner linken Stirnseite einwärts übergreift.

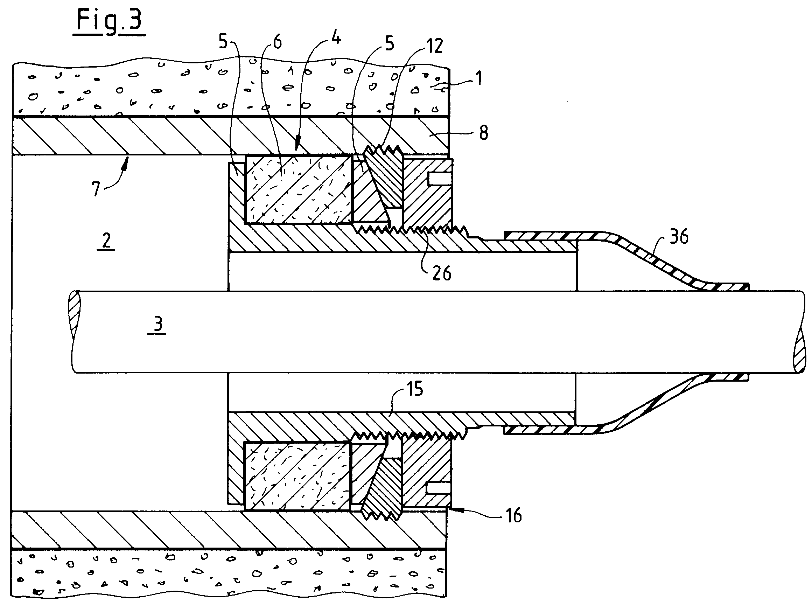

Der für die Dichtkörper 6, 20 und die Bewegung der Klemmteile 9, 23 erforderliche Preßdruck wird mit Spannmuttern 24, 25 erzeugt, die in einem Spanngewinde 26 geführt sind, in dem die Spannmutter 24, 25 in Richtung zur benachbarten Druckscheibe 5, 21 hin verdrehbar und im Spanngewinde 26 gegen diese Druckscheibe bzw. die neben ihr angeordneten Klemmteile 9, 23 verspannbar ist. Im Ausführungsbeispiel nach der Fig. 3 ist das Spanngewinde 26 an einer der Umfangsflächen des Rohrstutzens 15 angeordnet, im Ausführungsbeispiel nach Fig. 4 befinden sich die Spanngewinde 26, 26' sowohl an der inneren als auch an der äußeren Umfangsfläche des Rohrstutzens 15. Diese Ausbildung der Spanngewinde 26, 26' am Rohrstutzen 15 setzt allerdings voraus, daß der Rohrstutzen 15 kreisförmigen Querschnitt besitzt, so daß sich die Spannmuttern 24, 25 in den Spanngewinden 26, 26' drehen lassen. In den Ausführungsbeispielen nach den Fig. 1 und 2 dagegen sind zur Erzeugung des Preßdrucks jeweils mit dem Spanngewinde 26 versehene und eine eigene Spannmutter 25 tragende Spannbolzen 27 vorgesehen, welche die beiden Druckscheiben 5 des Dichtkörpers 6 miteinander verbinden und die Klemmteile 9 in Langlöchern 28 durchsetzen, die in der Verstellrichtung der Klemmteile 9 verlaufen und mindestens von gleicher Länge sind wie der maximal mögliche Verstellweg der Klemmteile 9 nach innen bzw. außen. Die Spannbolzen 27 sind an der innen in der Wandöffnung 2, in den Figuren also links liegenden Druckscheibe 5 drehfest gehalten und am anderen Ende mit dem Spanngewinde 26 und der von außerhalb der Wandöffnung zugänglichen und betätigbaren Spannmutter 25 versehen, die den Klemmteilen 9 jeweils über eine Unterlagscheibe 29 anliegt. In gleicher Weise kann selbstverständlich auch der innere Dichtkörper 20 in Fig. 4 mit Hilfe von Spannbolzen mit Preßdruck beaufschlagt werden. Auch können in Fig. 1 zusätzliche Spannbolzen 30 nur zur Verspannung des Dichtkörpres 6 dienen.

## Patentansprüche

1. Vorrichtung zur Durchführung von Leitungen (3), wie Rohre, Kabel oder dergl., durch eine Öffnung (2) in einer Wand (1), wie Mauer- oder Betonwand, mit einem in die Wandöffnung (2) einsetzbaren, die Leitungen (3) aufnehmenden und gegen die Leitungen abdichtbaren Einsatzteil (4), das einen in Leitungslängsrichtung zwischen zwei Druckscheiben (5) angeordneten Dichtkörper (6) aufweist, der unter einem von den Druckscheiben (5) auf ihn ausgeübten Preßdruck zusammendrückbar ist und dadurch gegen die Laibungsfläche (7) der Wandöffnung (2) abdichtet, dadurch gekennzeichnet, daß an einer der Druckscheiben (5) mindestens ein vom Preßdruck beaufschlagtes Klemmteil (9) angeordnet ist, das an einer Gleitfläche (10) verstellbar geführt ist, die zur Leitungslängsrichtung geneigt verläuft, so daß das Klemmteil (9) unter der Wirkung des Preßdrucks auf der Gleitfläche (10) auswärts gegen die Laibungsfläche (7) verstellt und gegen sie angepreßt wird.

2. Vorrichtung nach Anspruch 1, dadurch gekennzeichnet, daß das Klemmteil (9) auf der vom Dichtkörper (6) abgewandten Seite der Druckscheibe (5) angordnet und die Gleitfläche (10) an der Druckscheibe (5) und am Klemmteil (9) ausgebildet ist, das auf der von der Gleitfläche (10) abgewandten Seite eine zur Leitungslängsrichtung senkrechte Stirnfläche (11) für die Beaufschlagung mit dem Preßdruck aufweist.

3. Vorrichtung nach Anspruch 1 oder 2, dadurch gekennzeichnet, daß bei mehreren Klemmteilen (9) diese gleichmäßig über den Umfang des Einsatzteils (4) verteilt sind.

4. Vorrichtung nach einem der Ansprüche 1 bis 3, dadurch gekennzeichnet, daß die Gleitfläche (10) vom Boden einer in der Druckscheibe (5) auswärts zur Laibungsfläche (7) verlaufenden Nut (13) gebildet ist, in der das Klemmteil (9) längsverstellbar geführt ist.

5. Vorrichtung nach einem der Ansprüche 1 bis 3, dadurch gekennzeichnet, daß die Klemmteile (9) als sektorförmige Ringabschnitte und die Gleitflächen (10) als Kegelflächen ausgebildet sind.

6. Vorrichtung nach einem der Ansprüche 1 bis 5, dadurch gekennzeichnet, daß die Klemmteile (9) gegen die Laibungsfläche (7) gerichtete scharfkantige oder spitze Vorsprünge (12) aufweisen, die beim Anpressen der Klemmteile (9) gegen die Laibungsfläche (7) in letztere eindringen.

7. Vorrichtung nach einem der Ansprüche 1 bis 6, dadurch gekennzeichnet, daß die Laibungsfläche (7) von der Innenseite eines die Wandöffnung (2) auskleidenden Futterrohrs (8) gebildet ist, das in seiner Längsrichtung unverschiebbar in der Wandöffnung (2) angeordnet und an seiner Außenseite gegen die Wand (1) abgedichtet ist.

8. Vorrichtung nach einem der Ansprüche 1 bis 7, dadurch gekennzeichnet, daß der Dichtkörper (6) den von der Laibungsfläche (7) umschlossenen Durchführungsquerschnitt ausfüllt, mit einer oder mehreren Durchführungsöffnungen (14) für die Aufnahme der Leitung bzw. Leitungen (3) versehen ist und unter der Wirkung des Preßdrucks nicht nur gegen die Laibungsfläche (7); sondern zugleich auch gegen die Leitung bzw. Leitungen (3) abdichtet.

9. Vorrichtung nach einem der Ansprüche 1 bis 7, dadurch gekennzeichnet, daß das Einsatzteil (4) einen mit seinem Inneren die Durchtrittsöffnung für die Leitung bzw. Leitungen (3) bildenden Rohrstutzen (15) aufweist, dessen Außenquerschnitt kleiner als der von der Laibungsfläche (7) umschlossene Durchführungsquerschnitt ist, so daß zwischen dem Rohrstutzen (15) und der Laibungsfläche (7) ein Ringraum (16) verbleibt, in dem sich der Dichtkörper (6) und die Druckscheiben (5) von entsprechender Ringform sowie die Klemmstücke (9) befinden.

10. Vorrichtung nach Anspruch 9, dadurch gekennzeichnet, daß eine der Druckscheiben (5) als Ringflansch des Rohrstutzens (15) ausgebildet ist.

11. Vorrichtung nach Anspruch 9 oder 10, dadurch gekennzeichnet, daß der Rohrstutzen (15) zur Abdichtung gegen die Leitung bzw. Leitungen (3) am vor der Wand (1) liegenden Stutzenende eine Dichtmanschette (36) trägt, die auf die Leitung bzw. Leitungen (3) aufgeschrumpft ist.

12. Vorrichtung nach Anspuch 9 oder 10, dadurch gekennzeichnet, daß im Inneren des Rohrstutzens (15) ein Füllkörper (17) angeordnet ist, der eine oder mehrere Durchtrittsöffnungen (18) für die Leitung bzw. Leitungen (3) aufweist und sowohl gegen den Rohrstutzen (15) als auch gegen die Leitung bzw. Leitungen (3) abgedichtet ist.

13. Vorrichtung nach Anspruch 12, dadurch gekennzeichnet, daß zwischen dem Füllkörper (17) und dem Rohrstutzen (15) ein Ringraum (19) besteht, in dem in gleicher Weise wie der Dichtkörper (6) im Ringraum (16) zwischen dem Rohrstutzen (15) und der Laibungsfläche (7) ein weiterer Dichtkörper (20) zwischen zwei weiteren Druckscheiben (21) angeordnet ist, der unter dem Preßdruck dieser Druckscheiben (21) zusammendrückbar ist und dadurch sowohl gegen den Rohrstutzen (15) als auch gegen den Füllkörper (17) abdichtet.

14. Vorrichtung nach Anspruch 13, dadurch gekennzeichnet, daß einer der weiteren Druckscheiben (21) mindestens ein weiteres Klemmteil (22) zugeordnet ist, wobei die diesem Klemmteil (22) zugeordnete Gleitfläche (23) so geneigt ist, daß das Klemmteil (22) unter der Wirkung des Preßdrucks auf der Gleitfläche (23) einwärts vor die Stirnfläche (17') des Füllkörpers (17) verstellt wird und in dieser Stellung für den Füllkörper (17) einen Anschlag bildet, der den Füllkörper (17) im Rohrstutzen (15) gegen Verschiebung in Leitungslängsrichtung sichert.

15. Vorrichtung nach einem der Ansprüche 9 bis 14, dadurch gekennzeichnet, daß in einem Spanngewinde (26, 26') eine Spannmutter (24, 24') geführt ist, die zur Erzeugung des Preßdrucks in Richtung zur benachbarten Druckscheibe (5, 21) verdrehbar und im Spanngewinde gegen diese Druckscheibe oder die neben ihr angeordneten Klemmteile (9, 22) verspannbar ist.

16. Vorrichtung nach Anspruch 15, dadurch gekennzeichnet, daß das Spanngewinde (26) an einer der Umfangsflächen des Rohrstutzens (15) angeordnet ist.

17. Vorrichtung nach Anspruch 16, dadurch gekennzeichnet, daß bei je einem Dichtkörper (6, 20) auf beiden Seiten des Rohrstutzens (15) je ein eigenes Spanngewinde (26, 26') auf der inneren und auf der äußeren Umfangsfläche des Rohrstutzens (15) mit je einer eigenen Spannmutter (24, 24') vorgesehen ist.

18. Vorrichtung nach Anspruch 15, dadurch gekennzeichnet, daß zur Erzeugung des Preßdrucks jeweils mit dem Spanngewinde (26) versehene und eine eigene Spannmutter (25) tragende Spannbolzen (27) vorgesehen sind, welche die beiden Druckscheiben (5, 21) jedes Dichtkörpers (6, 20) verbinden und die Klemmteile (9, 22) in Langlöchern (28) durchsetzen, die in der Verstellrichtung der Klemmteile verlaufen und mindestens von gleicher Länge wie der Verstellweg der Klemmteile sind.

19. Vorrichtung nach Anspruch 18, dadurch gekennzeichnet, daß die Spannbolzen (27) an der innen in der Wandöffnung (2) liegenden Druckscheibe (5, 21) drehfest gehalten sind und am anderen Ende das Spanngewinde (26) mit der von außerhalb der Wandöffnung (2) zugänglichen Spannmutter (25) aufweisen.
